# EUROPEAN PATENT SPECIFICATION

(11) **EP 1 752 692 B1**
(45) Date of publication and mention of the grant of the patent: **14.01.2009**
(21) Application number: 06117903.2
(22) Date of filing: 26.07.2006
(51) Int. Cl.: F16K 31/06, F01L 9/04, H01F 7/14, H01F 7/18

(54) **Electromagnetically driven valve**
Elektromagnetisch angetriebenes Ventil
Soupape à commande électromagnétique

(30) Priority: 08.08.2005 JP 2005229603
(43) Date of publication of application: 14.02.2007
(73) Proprietor: TOYOTA JIDOSHA KABUSHIKI KAISHA, Toyota-shi, Aichi 471-8571 (JP)
(72) Inventor: Asano, Masahiko Toyota Jidosha Kabushiki Kaisha, Toyota-shi Aichi 471-8571 (JP); Sugie, Yutaka Toyota Jidosha Kabushiki Kaisha, Toyota-shi Aichi 471-8571 (JP)
(74) Representative: TBK-Patent

(56) References cited:
- EP-A- 1 036 964
- EP-A- 1 091 368
- EP-A- 1 296 024
- US-B2- 6 467 441

## Description

The invention relates to an electromagnetically driven valve. More particularly, the invention relates to a pivot-type electromagnetically driven valve which is used in an internal combustion engine and driven by electromagnetic force and elastic force.

US Patent No. 6,467,441, for example, discloses an electromagnetically driven valve.

The valve disclosed in US Patent No. 6,467,441 is electromagnetically driven by a pivot drive having a fulcrum in a disc (armature). However, the energizing switching time with a single coil connection is short. As a result, when the voltage is low and the rise in electric current is slow, the electromagnetically driven valve cannot operate.

EP-A-1 091 368 discloses an electromagnetically driven valve with a simple and reliable electrical connection.

### SUMMARY OF THE INVENTION

This invention thus provides an electromagnetically driven valve that can operate at low voltage.

According to the invention, there is provided an electromagnetically driven valve according to claim 1.

Further developments of the electromagnetically driven valve are set out in the dependent claims.

In the electromagnetically driven valve, the electric current supply portion runs a reduced electric current, which is greater than 0, running through the valve opening coil and the valve closing coil when moving the oscillating member from one of the valve opening coil and valve closing coil to the other. Therefore, the time that it takes the attraction current to rise when attracting the oscillating member at the other of the valve opening coil and the valve closing coil can be shortened, which improves responsiveness. As a result, it is possible to provide an electromagnetically driven valve that can be driven at low voltage.

The foregoing electromagnetically driven valve may further include an elastic member which keeps the oscillating member in a neutral position between the valve opening coil and the valve closing coil.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a cross-sectional view of an electromagnetically driven valve according to a first example embodiment of the invention;
FIG 2 is a circuit diagram of a valve opening coil and a valve closing coil which are serially connected;
FIG 3 is a graph illustrating the relationship between current value and lift amount of the electromagnetically driven valve according to the first example embodiment;
FIG. 4 is a cross-sectional view illustrating the operation of the electromagnetically driven valve according to the first example embodiment;
FIG. 5 is another cross-sectional view illustrating the operation of the electromagnetically driven valve according to the first example embodiment; and
FIG. 6 is a cross-sectional view of an electromagnetically driven valve according to a second example embodiment of the invention.

### DETAILED DESCRIPTION OF THE PREFERRED EMBODIMENTS

Example embodiments of the invention will hereinafter be described with reference to the accompanying drawings. In the following example embodiments, like or corresponding parts will be denoted by like reference numerals, and descriptions thereof will not be repeated.

### (First example embodiment)

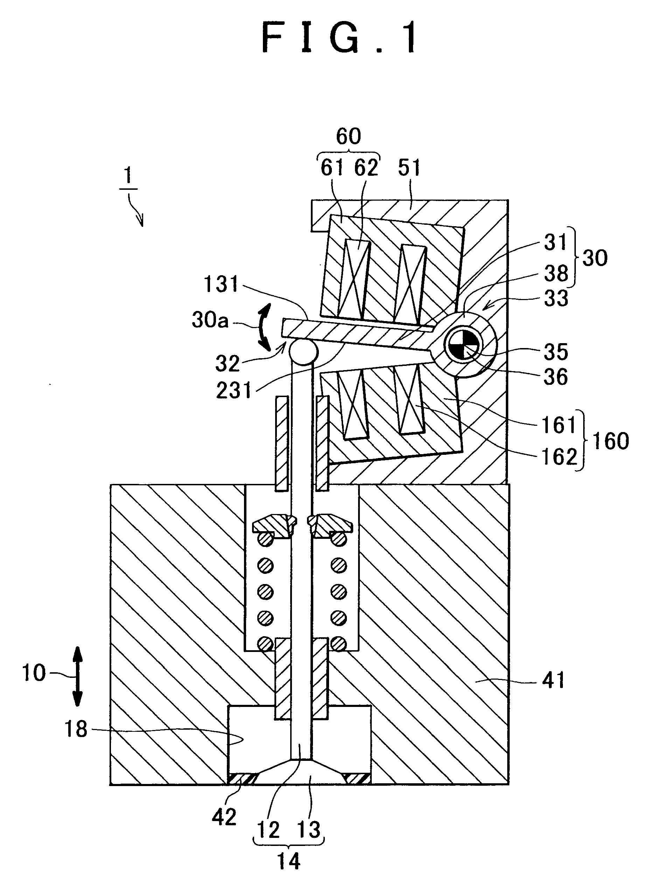

FIG 1 is a cross-sectional view of an electromagnetically driven valve according to a first example embodiment of the invention. Referring to the drawing, an electromagnetically driven valve 1 has a main body 51, a valve closing electromagnet 60 and a valve opening electromagnet 160 which are both attached to the main body 51, a disc 30 that is provided between the valve closing electromagnet 60 and the valve opening electromagnet 160, and a valve stem 12, which is driven by the disc 30.

The valve body 51, which is shaped like a sideways letter "U" is a base member to which various components are attached. The valve closing electromagnet 60 has a core 61 of magnetic material and a valve closing coil 62 wound around the core 61. Similarly, the valve opening electromagnet 160 has a core 161 of magnetic material and a valve opening coil 162 wound around the core 161. Energizing the valve closing coil 62 and the valve opening coil 162 generates a magnetic field that drives the disc 30.

The disc 30 is attracted to either the valve closing electromagnet 60 or the valve opening electromagnet 160 by the attraction force thereof. As a result, the disc 30 reciprocates between the valve opening electromagnet 160 and the valve closing electromagnet 60. The reciprocating motion of the disc 30 in the direction shown by arrow 30a is transmitted via the valve stem 12 to a valve element 14.

The electromagnetically driven valve 1 is an electromagnetically driven valve that is operated by electromagnetic force in cooperation with elastic force, and has a valve stem 12, which serves as a valve shaft. A valve element 14 reciprocates in the direction in which the valve stem 12 extends (i.e., in the direction of arrow 10). A disc 30 serves as the oscillating member which extends from a driving end 32, which is operatively linked with the valve element 14, toward a pivoting end 33 and which pivots around a central shaft 35 that extends through the pivoting end 33. A valve opening coil 162 and a valve closing coil 62, oscillate the disc 30. A power supply supplies electric current to the valve opening coil 162 and the valve closing coil 62. The valve opening coil 162 and the valve closing coil 62 are serially connected. The power supply supplies electric current to the valve opening coil 162 and the valve closing coil 62 so that a reduced electric current, which is greater than 0, runs through the valve opening coil 162 and the valve closing coil 62 when moving the disc 30 from one of the valve opening coil 162 and the valve closing coil 62 to the other of the valve opening coil 162 and the valve closing coil 62.

The electromagnetically driven valve 1 also includes a torsion bar 36 that serves as an elastic member that keeps the disc 30 in a neutral position between the valve opening coil 162 and the valve closing coil 62.

The electromagnetically driven valve 1 according to this example embodiment may be used as an intake valve or exhaust valve of an internal combustion engine, such as a gasoline engine or a diesel engine. In the described embodiment, the valve element serves as an intake valve provided in an intake port 18, but the valve element according to the invention may also serve as an exhaust valve.

The electromagnetically driven valve 1 shown in FIG 1 is a pivot-type electromagnetically driven valve which uses the disc 30 as the motion mechanism. The main body 51 is provided on a cylinder head 41. The valve opening electromagnet 160 is provided on the lower side in the main body 51 and the valve closing electromagnet 60 is provided on the upper side in the main body 51. The valve opening electromagnet 160 has an iron core 161 and a valve opening coil 162 wound around the core 161. When electric current is run through the valve opening coil 162, a magnetic field is generated around the valve opening coil 162, which attracts the disc 30.

Similarly, the valve closing electromagnet 60 has an iron core 61 and a valve closing coil 62 wound around the core 61. When electric current is run through the valve closing coil 62, a magnetic field is generated around the valve closing coil 62, which attracts the disc 30.

The valve opening coil 162 and the valve closing coil 62 are serially connected. The disc 30 has an arm portion 31 and a bearing portion 38. The arm portion 31 extends from one end 32 to the other end 33. The arm portion 31 is a member which is oscillates (pivots) in the direction of arrow 30a when attracted by the valve closing electromagnet 60 and the valve opening electromagnet 160. The bearing portion 38 is attached to an end portion of the arm portion 31, and the arm portion 31 pivots around the bearing portion 38. An upper side surface 131 of the arm portion 31 faces the valve closing electromagnet 60 while a lower side surface 231 of the arm portion 31 faces the valve opening electromagnet 160. The lower side surface 231 contacts the valve stem 12.

The bearing portion 38 has a cylindrical shape and houses the torsion bar 36 inside. A first end portion of the torsion bar 36 fits together with the main body 51 by spline fitting while the other end portion fits together with the bearing portion 38. As a result, when the bearing portion 38 pivots, the torsion bar 36 applies an urging force against the pivot of the bearing portion 38. Therefore, an urging force that urges the disc 30 toward the neutral position is always applied to the bearing portion 38.

The cylinder head 41 is mounted to the upper portion of the engine. The intake port 18 is provided in the lower portion of the cylinder head 14. This intake port 18 is a passage for introducing intake air into the combustion chamber. An air-fuel mixture or air passes through the intake port 18. A valve seat 42 is provided between the intake port 18 and the combustion chamber. This valve seat 42 enables greater sealability of the valve element 14.

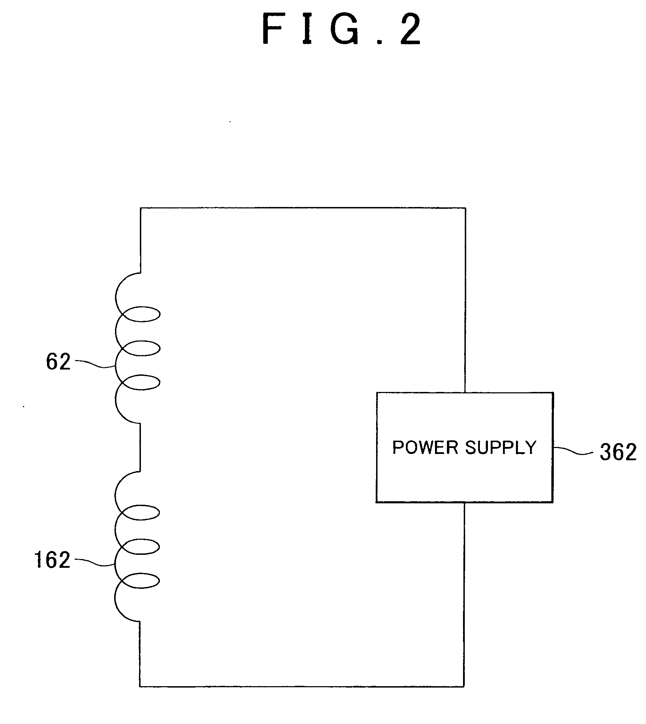

FIG. 2 is a circuit diagram of the valve opening coil 162 and the valve closing coil 62 which are serially connected. Referring to the drawing, the valve opening coil 162 and the valve closing coil 62 are serially connected to a power supply 362. As a result, equal electric current runs through the valve closing coil 62 and the valve opening coil 162.

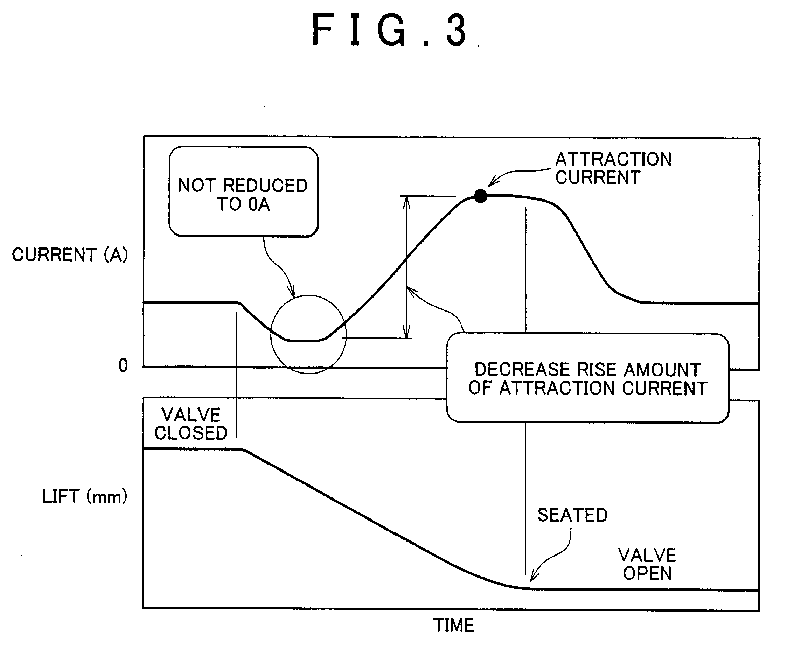

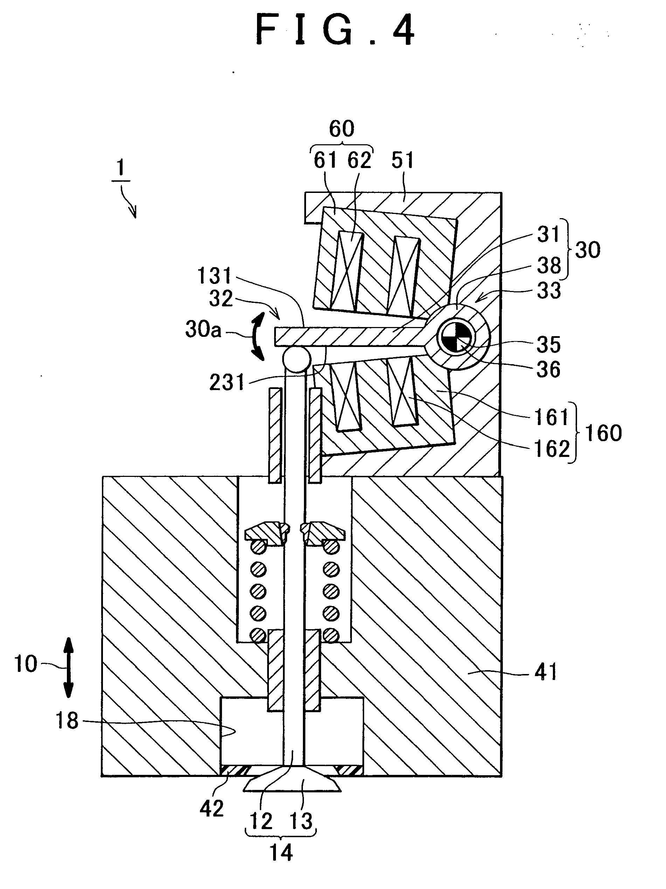

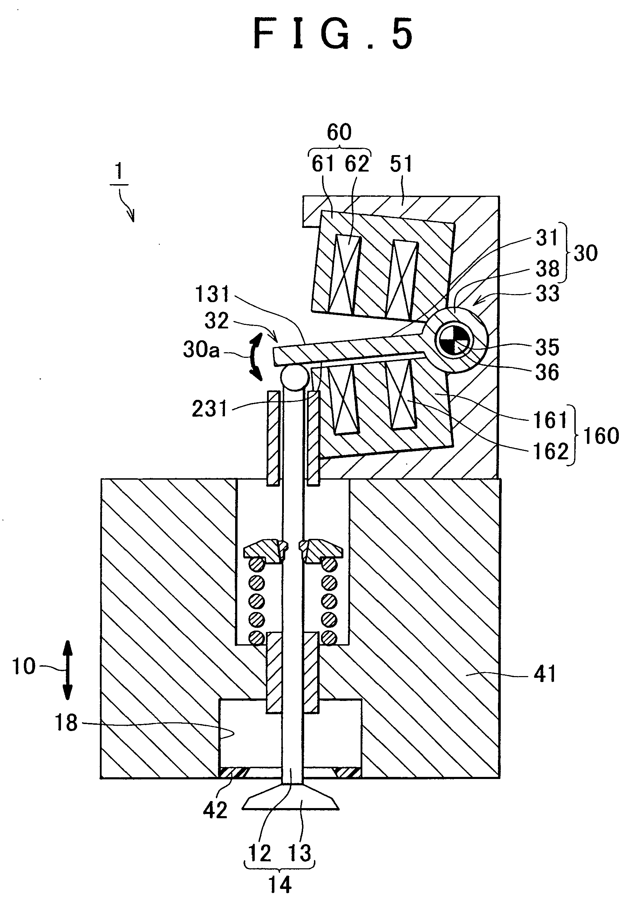

FIG. 3 is a graph illustrating the relationship between current value and lift amount of the electromagnetically driven valve according to the first example embodiment. FIGS. 4 and 5 are cross-sectional views illustrating the operation of the electromagnetically driven valve according to the first example embodiment, with FIG. 4 being a cross-sectional view showing the valve in the neutral position and FIG. 5 being a cross-sectional view showing the valve in the open position. Also, FIG. 1 is a cross-sectional view showing the valve in the closed position. Operation of the electromagnetically driven valve according to the first example embodiment will be described with reference to FIGS. 1 to 5. First, when the valve is closed, as shown in FIG. 1, a predetermined electric current is run through the valve opening coil 162 and the valve closing coil 62, as denoted by "valve closed" in FIG. 3. At this time, the distance between the valve closing coil 62 and the disc 30 is closer than the distance between the valve opening coil 162 and the disc 30 so greater force acts between the disc 30 and the valve closing coil 62. As a result, the disc 30 attracts the valve closing coil 62.

When opening the valve, the electric current flowing through the valve opening coil 162 and the valve closing coil 62 is gradually reduced. At this time, as shown in FIG. 3, the electric current is maintained larger than 0A. Because the electric current is lower than it is when the valve is in the closed position, however, the force acting between the valve closing coil 62 and the disc 30 decreases, and becomes less than the elastic force from the torsion bar 36. As a result, the disc 30 moves downward in FIG. 1 due to the elastic force (torsion force) of the torsion bar 36 to the neutral position shown in FIG. 4. When the disc 30 is in the neutral position shown in FIG. 4, the arm portion 31 of the disc 30 is between the valve opening magnet 160 and the valve closing magnet 60. Beyond the point shown in FIG. 4, the arm portion 31 moves toward the valve opening magnet 160. Then the electric current increases to the "attraction current" in FIG. 3. Accordingly, the electric current flowing through the valve opening coil 162 increases so that the valve opening coil 162 drives the arm portion 31 with great force. As a result, the arm portion 31 moves downward, as shown in FIG. 5, until it reaches the "seated" point shown in FIG. 3. In this state, the valve is open and the gap between a bell portion 13, which forms the valve element, and the valve seat 42 is large. Because the torsion bar 36 is being twisted while the valve moves from the neutral position to the open position, it applies a force which counteracts movement of the arm portion 31 to the bearing portion 38. However, because the force from the valve opening coil 162 that attracts the arm portion 31 is greater than the force applied from the torsion bar, the arm portion 31 moves downward.

When the valve is open, the same electric current as when the valve is closed runs through the valve opening coil 162 and the valve closing coil 62. Moreover, when moving the valve from the open position shown in FIG. 5 to the closed position shown in FIG. 1, the electric current running through the valve opening coil 162 and the valve closing coil 62 is reduced, but not all the way to 0A. Accordingly, the force from the valve opening coil 162 that attracts the arm portion 31 becomes weaker. As a result, the torsion force applied by the torsion bar 36 to the bearing portion 38 overcomes the force applied by the valve opening coil 162 to the arm portion 31, so the disc 30 approaches the neutral position shown in FIG. 4. Even in this case, however, the electric current running through the valve opening coil 162 and the valve closing coil 62 is greater than 0A. Increasing the electric current running through the valve opening coil 162 and the valve closing coil 62 when the disc 30 is near the neutral position shown in FIG. 4 results in the valve closing coil 62 attracting the disc 30, thus closing the valve.

Repeatedly opening and closing the valve in this way makes it possible to drive the electromagnetically driven valve 1. In the electromagnetically driven valve 1 according to the first example embodiment described above, the electric current is not reduced all the way to 0A when driving the valve between the closed position and the open position, which makes it possible to reduce the time that it takes for the electric current to rise to the attraction current for the next operation (either opening or closing of the valve). Accordingly, responsiveness to the electromagnetic force is improved and the voltage can be lowered.

### (Example embodiment 2)

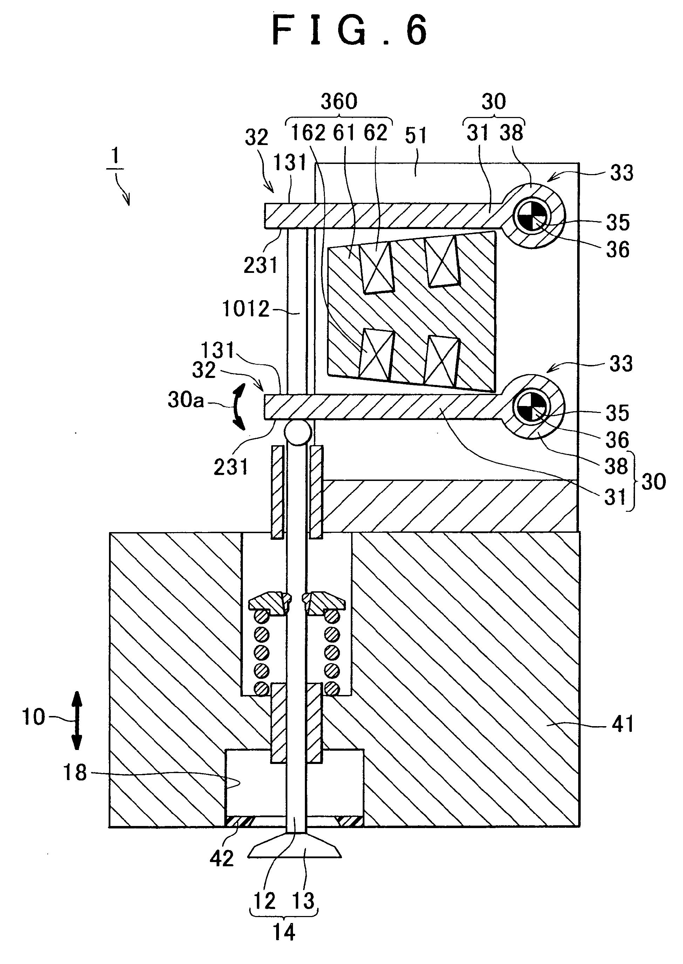

FIG. 6 is a cross-sectional view of the electromagnetically driven valve 1 according to a second example embodiment of the invention. Referring to the drawing, the electromagnetically driven valve 1 according to the second example embodiment of the invention differs from the electromagnetically driven valve 1 according to the first example embodiment in that has two discs 30 (an upper disc and a lower disc). These discs 30 are connected by a stem 1012. The valve opening coil 162 and the valve closing coil 62 are wound in a single electromagnet 360. The valve opening coil 162 and the valve closing coil 62 are serially connected.

The electromagnetically driven valve 1 according to the second example embodiment structured as described above also displays the same effects as the electromagnetically driven valve 1 according to the first example embodiment.

The example embodiments disclosed herein are in all respects merely examples and should in no way be construed as limiting. The scope of the invention is indicated not by the foregoing description but by the scope of the claims, and is intended to include all modifications that are within the scope and meanings equivalent to the scope of the claims.

This invention may also be used in the field of an electromagnetically driven valve of an internal combustion engine mounted in a vehicle, for example.

## Claims

1. An electromagnetically driven valve which operates by electromagnetic force in cooperation with elastic force, and which includes:
a valve element (14) that has a valve shaft (12), which reciprocates in a direction in which the valve shaft (12) extends;
a oscillating member (30) which extends from a driving end (32), which is operatively linked with the valve element (14), to a pivoting end (33), and pivots around the pivoting end (33);
a valve opening coil (162) and a valve closing coil (62) which oscillate the oscillating member (30); and
an electric current supply portion which supplies electric current to the valve opening coil (162) and the valve closing coil (62),
**characterised in that**
the valve opening coil (162) and the valve closing coil (62) are serially connected, and
wherein the electric current supply portion:
supplies electric current to the valve opening coil (162) and the valve closing coil (62) to run a reduced electric current, which is greater than 0, through the valve opening coil (162) and the valve closing coil (62) when moving the oscillating member (30) from one of the valve opening coil (162) and the valve closing coil (62) to the other of the valve opening coil (162) and the valve closing coil (62)
supplies a first electric current to the valve opening coil (162) and the valve closing coil (62) when maintaining the position of the oscillating member (30) on the side of either one of the valve opening coil (162) and the valve closing coil (62);
supplies a second electric current, which is lower than the first electric current, to the valve opening coil (162) and the valve closing coil (62) during moving the oscillating member (30) from either one of the valve opening coil (162) and the valve closing coil (62) to the other of the valve opening coil (162) and the valve closing coil (62); and
after reducing the electric current running through the valve opening coil (162) and the valve closing coil (62) from the first electric current to the second electric current, supplies a third electric current, which is higher than the second electric current, to the valve opening coil (162) and the valve closing coil (62) when the oscillating member (30) is moved over a neutral position between the valve opening coil (162) and the valve closing coil (62), and is near either one of the valve opening coil (162) and the valve closing coil (62).

2. The electromagnetically driven valve according to claim 1, **characterised in that** the valve opening coil (162) is wound around a first core (161) of magnetic material and the valve closing coil (62) is wound around a second core (61) of magnetic material.

3. The electromagnetically driven valve according to any one of claims 1 or 2, **characterised by** further comprising an elastic member (36) that keeps the oscillating member (30) in a neutral position between the valve opening coil (162) and the valve closing coil (62).

4. The electromagnetically driven valve according to claim 3, **characterised in that** the elastic member (36) is a torsion bar that is twisted by oscillating of the oscillating member (30) and applies a reaction force when twisted to the oscillating member (30).

5. The electromagnetically driven valve according to claim 1, **characterised in that** the oscillating member (30) includes a first oscillating member and a second oscillating member, and is provided with a stem (1012) which operatively links a driving end of the first oscillating member that is operatively linked with the valve element (14) with a driving end of the second oscillating member, wherein the valve opening coil (162) and the valve closing coil (62) are wound around a core (61) of magnetic material provided between the first oscillating member and the second oscillating member.

6. The electromagnetically driven valve according to claim 1, **characterised in that** the electromagnetically driven valve is applied to at least one of an intake valve and an exhaust valve of an internal combustion engine mounted in a vehicle.

## Patentansprüche

1. Elektromagnetisch angetriebenes Ventil, das durch elektromagnetische Kraft in Zusammenwirkung mit einer elastischen Kraft arbeitet, mit:
einem Ventilelement **(14)** mit einem Ventilschaft **(12),** das sich in einer Richtung hin- und herbewegt, in der sich der Ventilschaft **(12)** erstreckt;
einem Schwingelement **(30),** das sich von einem Antriebsende **(32),** das arbeitend mit dem Ventilelement **(14)** verbunden ist, zu einem Achsenende **(33)** erstreckt und sich um das Achsenende **(33)** dreht;
einer Ventilöffnungsspule **(162)** und einer Ventilschließspule **(62),** die das Schwingelement **(30)** in Schwingung versetzen; und
einem Versorgungsabschnitt elektrischen Stromes, der der Ventilöffnungsspule **(162)** und der Ventilschließspule **(62)** elektrischen Strom zuführt,
**dadurch gekennzeichnet, dass**
die Ventilöffnungsspule **(162)** und die Ventilschließspule **(62)** in Reihe verbunden sind, und
wobei der Versorgungsabschnitt elektrischen Stromes:
elektrischen Strom an die Ventilöffnungsspule **(162)** und die Ventilschließspule **(62)** zuführt, um einen reduzierten elektrischen Strom größer als 0 durch die Ventilöffnungsspule **(162)** und die Ventilschließspule **(62)** zu führen, wenn das Schwingelement **(30)** von der Ventilöffnungsspule **(162)** oder der Ventilschließspule **(62)** zu der anderen der Ventilöffnungsspule **(162)** oder der Ventilschließspule **(62)** bewegt wird;
einen ersten elektrischen Strom der Ventilöffnungsspule **(162)** und der Ventilschließspule **(62)** zuführt, wenn die Position des Schwingelements **(30)** seitens der Ventilöffnungsspule **(162)** oder der Ventilschließspule **(62)** beibehalten wird;
einen zweiten elektrischen Strom, der kleiner als der erste elektrische Strom ist, der Ventilöffnungsspule **(162)** und der Ventilschließspule **(62)** während eines Bewegens des Schwingelements **(30)** von der einen der Ventilöffnungsspule **(162)** und der Ventilschließspule **(62)** zu der anderen der Ventilöffnungsspule **(162)** und der Ventilschließspule **(62)** zuführt; und
nach Reduzieren des elektrischen Stromes, der durch die Ventilöffnungsspule **(162)** und die Ventilschließspule **(62)** fließt, von dem ersten elektrischen Strom auf den zweiten elektrischen Strom, einen dritten elektrischen Strom, der größer als der zweite elektrische Strom ist, der Ventilöffnungsspule **(162)** und der Ventilschließspule **(62)** zuführt, wenn das Schwingelement **(30)** über eine neutrale Position hinaus zwischen der Ventilöffnungsspule **(162)** und der Ventilschließspule **(62)** bewegt wird, und sich näher bei der Ventilöffnungsspule **(162)** oder der Ventilschließspule **(62)** befindet.

2. Elektromagnetisch angetriebenes Ventil gemäß Anspruch 1, **dadurch gekennzeichnet, dass** die Ventilöffnungsspule **(162)** um einen ersten Kern **(161)** aus magnetischem Material gewickelt ist, und die Ventilschließspule **(62)** um einen zweiten Kern **(61)** aus magnetischem Material gewickelt ist.

3. Elektromagnetisch angetriebenes Ventil gemäß einem der Ansprüche 1 oder 2, weiterhin mit einem elastischen Element **(36),** das das Schwingelement **(30)** auf einer neutralen Position zwischen der Ventilöffnungsspule **(162)** und der Ventilschließspule **(62)** hält.

4. Elektromagnetisch angetriebenes Ventil gemäß Anspruch 3, **dadurch gekennzeichnet, dass** das elastische Element **(36)** ein Torsionsstab ist, der durch Schwingen des Schwingelements **(30)** verdreht wird und eine Gegenkraft aufbringt, wenn dieser in Richtung des Schwingelements **(30)** verdreht ist.

5. Elektromagnetisch angetriebenes Ventil gemäß Anspruch 1, **dadurch gekennzeichnet, dass** das Schwingelement **(30)** ein erstes Schwingelement und ein zweites Schwingelement umfasst, und mit einem Schaft **(1012)** ausgestattet ist, der ein Antriebsende des ersten Schwingelements, das arbeitend mit dem Ventilelement **(14)** verbunden ist, mit einem Antriebsende des zweiten Schwingelements arbeitend verbindet, wobei die Ventilöffnungsspule **(162)** und die Ventilschließspule **(62)** um einen Kern **(61)** aus magnetischem Material gewickelt sind, der zwischen dem ersten Schwingelement und dem zweiten Schwingelement bereitgestellt ist.

6. Elektromagnetisch angetriebenes Ventil gemäß Anspruch 1, **dadurch gekennzeichnet, dass** das elektromagnetisch angetriebene Ventil bei einem Ansaugventil und/oder einem Auslassventil einer bei einem Fahrzeug angebrachten Verbrennungskraftmaschine angewendet wird.

## Revendications

1. Soupape à commande électromagnétique qui fonctionne par le biais d'une force électromagnétique en coopération avec une force élastique, et qui inclut:
un élément de soupape (14) qui a un arbre de soupape (12), qui effectue un mouvement de va-et-vient dans une direction dans laquelle l'arbre de soupape (12) se déploie;
un organe oscillant (30) qui s'étend d'une extrémité d'entraînement (32), en liaison opérationnelle avec l'élément de soupape (14), à une extrémité pivotante (33), et pivote autour de l'extrémité pivotante (33);
une bobine d'ouverture de soupape (162) et une bobine de fermeture de soupape (62) qui font osciller l'organe oscillant (30); et
une partie d'alimentation en courant électrique qui alimente la bobine d'ouverture de soupape (162) et la bobine de fermeture de soupape (62) en courant électrique,
**caractérisée en ce que**
la bobine d'ouverture de soupape (162) et la bobine de fermeture de soupape (62) sont reliées en série, et
où la partie d'alimentation en courant électrique:
alimente la bobine d'ouverture de soupape (162) et la bobine de fermeture de soupape (62) en courant électrique pour faire circuler un courant électrique réduit, qui est supérieur à 0, à travers la bobine d'ouverture de soupape (162) et la bobine de fermeture de soupape (62) lors du déplacement de l'organe oscillant (30) de l'une de la bobine d'ouverture de soupape (162) et de la bobine de fermeture de soupape (62) à l'autre de la bobine d'ouverture de soupape (162) et de la bobine de fermeture de soupape (62);
alimente la bobine d'ouverture de soupape (162) et la bobine de fermeture de soupape (62) en un premier courant électrique lors du maintien de la position de l'organe oscillant (30) du côté de l'une ou l'autre de la bobine d'ouverture de soupape (162) et de la bobine de fermeture de soupape (62);
alimente la bobine d'ouverture de soupape (162) et la bobine de fermeture de soupape (62) en un deuxième courant électrique, qui est plus faible que le premier courant électrique, lors du déplacement de l'organe oscillant (30) de l'une ou l'autre de la bobine d'ouverture de soupape (162) et de la bobine de fermeture de soupape (62) à l'autre de la bobine d'ouverture de soupape (162) et de la bobine de fermeture de soupape (62); et
après réduction du courant électrique qui circule à travers la bobine d'ouverture de soupape (162) et la bobine de fermeture de soupape (62) du premier courant électrique au deuxième courant électrique, alimente la bobine d'ouverture de soupape (162) et la bobine de fermeture de soupape (62) en un troisième courant électrique, qui est plus élevé que le deuxième courant électrique, lorsqu'on fait passer l'organe oscillant (30) à une position neutre entre la bobine d'ouverture de soupape (162) et la bobine de fermeture de soupape (62), et se trouve proche de l'une ou l'autre de la bobine d'ouverture de soupape (162) et de la bobine de fermeture de soupape (62).

2. Soupape à commande électromagnétique selon la revendication 1, **caractérisée en ce que** la bobine d'ouverture de soupape (162) est enroulée autour d'un premier noyau (161) en un matériau magnétique et la bobine de fermeture de soupape (62) est enroulée autour d'un deuxième noyau (61) en un matériau magnétique.

3. Soupape à commande électromagnétique selon l'une quelconque des revendications 1 ou 2, **caractérisée par** le fait de comprendre en plus un organe élastique (36) qui maintient l'organe oscillant (30) dans une position neutre entre la bobine d'ouverture de soupape (162) et la bobine de fermeture de soupape (62).

4. Soupape à commande électromagnétique selon la revendication 3, **caractérisée en ce que** l'organe élastique (36) est une barre de torsion qui se tord par l'oscillation de l'organe oscillant (30) et applique une force de réaction à l'organe oscillant (30) lorsqu'elle se tord.

5. Soupape à commande électromagnétique selon la revendication 1, **caractérisée en ce que** l'organe oscillant (30) inclut un premier organe oscillant et un deuxième organe oscillant, et est doté d'une tige (1012) qui relie de manière opérationnelle une extrémité d'entraînement du premier organe oscillant en liaison opérationnelle avec l'élément de soupape (14) à une extrémité d'entraînement du deuxième organe oscillant, où la bobine d'ouverture de soupape (162) et la bobine de fermeture de soupape (62) sont enroulées autour d'un noyau (61) en un matériau magnétique pourvu entre le premier organe oscillant et le deuxième organe oscillant.

6. Soupape à commande électromagnétique selon la revendication 1, **caractérisée en ce que** la soupape à commande électromagnétique est appliquée à au moins l'une d'une soupape d'admission et d'une soupape de refoulement d'un moteur à combustion interne monté sur un véhicule.
